(19) **Europäisches Patentamt / European Patent Office / Office européen des brevets**

(11) **EP 2 031 240 B1**

(12) # EUROPEAN PATENT SPECIFICATION

(45) Date of publication and mention
of the grant of the patent:
**07.05.2014   Bulletin 2014/19**

(51) Int Cl.:
**F03B 13/18** (2006.01)      **F03B 13/20** (2006.01)

(21) Application number: **07743916.4**

(22) Date of filing: **23.05.2007**

(86) International application number:
**PCT/JP2007/060482**

(87) International publication number:
**WO 2007/138939 (06.12.2007 Gazette 2007/49)**

(54) **WAVE ACTIVATED POWER GENERATION SYSTEM AND WAVE ACTIVATED POWER GENERATION PLANT**

WELLENAKTIVIERTES ENERGIEERZEUGUNGSSYSTEM UND ANLAGE ZUR WELLENAKTIVIERTEN ENERGIEERZEUGUNG

SYSTÈME DE GÉNÉRATION D'ÉLECTRICITÉ ACTIVÉ PAR UNE ONDE ET CENTRALE DE GÉNÉRATION D'ÉLECTRICITÉ ACTIVÉE PAR UNE ONDE

(84) Designated Contracting States:
**DK GB**

(30) Priority: **25.05.2006   JP 2006145760**

(43) Date of publication of application:
**04.03.2009   Bulletin 2009/10**

(73) Proprietor: **National University Corporation Kobe University**
**Kobe-shi, Hyogo 657-8501 (JP)**

(72) Inventor: **KANKI, Hiroshi**
**Kobe-shi, Hyogo 657-8501 (JP)**

(74) Representative: **Intès, Didier Gérard André et al**
**Cabinet Beau de Loménie**
**158, rue de l'Université**
**75340 Paris Cedex 07 (FR)**

(56) References cited:
**WO-A1-87/05078       WO-A1-2005/038248**
**WO-A1-2005/071257    DE-A1- 19 900 614**
**JP-A- 02 503 218      JP-A- 56 118 568**

EP 2 031 240 B1

**Description**

TECHNICAL FIELD

The present invention relates to a wave activated power generating system and a wave power plant which are capable of obtaining power utilizing wave energy.

BACKGROUND ART

The inventor has already disclosed a gyroscopic wave activated power generator in below mentioned patent documents 1 and 2.

To be more specific, patent documents 1 and 2 disclose a gyroscopic wave activated power generator including: a floating body; a gyroscope supported by the floating body; and a power generator connected to a gimbal shaft of the gyroscope via an increaser. The gyroscopic wave activated power generator causes a gimbal of the gyroscope to rotate in response to oscillation of the floating body with waves, thus driving the power generator to generate power. Patent document 1 especially discloses a gyroscopic wave activated power generator in which the floating body has a doughnut shape, which includes in an inner cylindrical part thereof a gyroscope having at least one vertical gimbal shaft.

Patent Document 1: JP2005-207332A
Patent Document 2: WO-A1-02077369

DISCLOSURE OF THE INVENTION

[TECHNICAL PROBLEM]

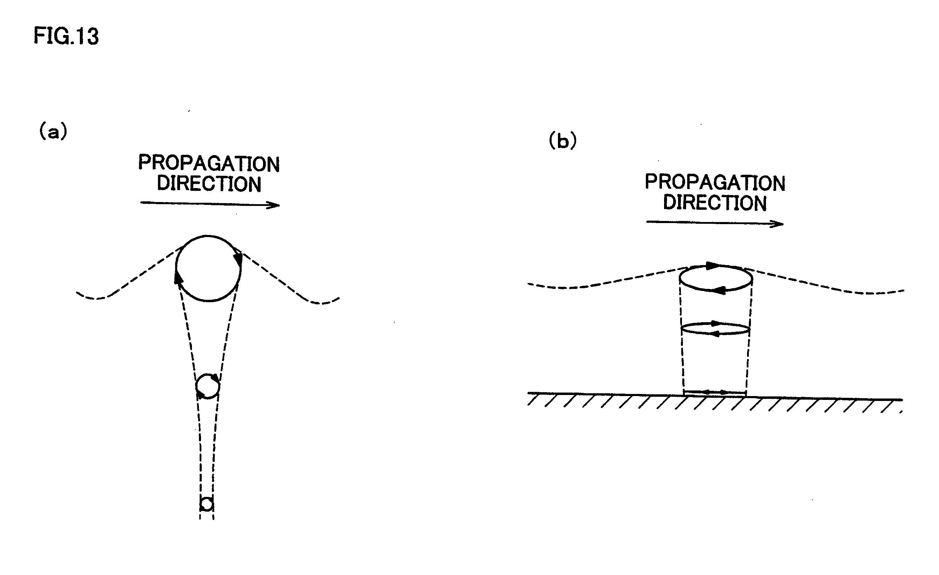

The gyroscopic wave activated power generator of patent documents 1 and 2 may be provided not only in an inshore area having a deep water depth, but also in an area in a sea or a lake having a relatively shallow water depth (approximately ten meters or shallower). Wave motions in areas of shallow water are great in up/down direction as well as in back/forth direction. However, traditional wave activated power generation methods have utilized only the wave motions in up/down direction. This has resulted in lower energy absorption capability and thus lower power generation output. Note that Fig. 13 (a) is a pattern diagram illustrating that a trajectory of a wave is circular in areas of deep water. Fig. 13 (b) is a pattern diagram illustrating that a trajectory of a wave is elliptical in areas of shallow water. Further, the hatched area of Fig. 13 (b) indicates bottom of water.

A conceivable approach to solving the problems is to increase output of power generation by adopting a larger flywheel, or by increasing the speed of rotation of the flywheel. This approach however is not very cost-effective.

Further, the gyroscopic wave activated power generator of patent documents 1 and 2, as described above, mainly receives wave energy in up/down direction when stricken by a wave. Thus, the gyroscopic wave activated power generator does not take advantage of wave energy in back/force direction. Wave movements in back/forth direction are sometimes more dominant than those in up/down direction especially near a shore such as a coast. However, the gyroscopic wave activated power generator does not sufficiently utilize this.

Thus, an object of the present invention is to provide a wave activated power generating system and a wave power plant which are capable of generating power more efficiently and more economically than ordinary even in areas of shallow water, by improving the traditional gyroscopic wave activated power generator.

[TECHNICAL SOLUTION AND EFFECT]

1. The present invention is a wave activated power generating system including at least one gyroscopic wave activated power generator which includes: a floating body; a gyroscope supported by the floating body; a power generator (e.g., low-speed power generator) connected to a gimbal shaft of the gyroscope via an increaser; or the like. The gyroscopic wave activated power generator allows a gimbal of the gyroscope to rotate in response to oscillation of the floating body with a wave, thus driving the power generator to generate power. The wave activated power generating system further includes a support structure whose one end is fixed to the ocean bottom while the other end extends out of the water. One end of the gyroscopic wave activated power generator is fixed to the support structure via a universal joint. The gyroscopic wave activated power generator is swingable. Further, the gimbal shaft is provided so that the gyroscopic wave activated power generator and the gimbal shaft oscillate in synchronization with one another.

The structure of 1 allows the gyroscopic wave activated power generator to move about a connecting part to the universal joint in accordance with a wave motion, not only in up/down direction, but in back/forth direction with respect to a travel direction of a wave. This allows more efficient and more economical generation of power than ordinary even in areas of shallow water. Further, this advances absorption of wave energy, thus dissipating a wave.

2. Preferably, the wave activated power generating system of above 1 further includes a bar fixed to a part of the support structure above or below the universal joint, and a brake member which bridges between non-center part of the bar and a non-edge part of the gyroscopic wave activated power generator. The brake member may be any kind as long as it has a brake function like a rope or an elastic member such as a spring or rubber, and is able to control an extra motion of the gyroscopic wave activated power generator (e.g., motion parallel to the travel direction of the wave).

The structure described in 2 is able to restrict an extra motion of the gyroscopic wave activated power generator (e.g., controlling a motion parallel to the travel direction of waves to be in a predetermined range, thus preventing the gyroscopic wave activated power generator from being lopsided). This allows more efficient and economical generation of power than ordinary in areas of shallower water. Further, this facilitates absorption of wave energy, thus efficiently dissipating a wave.

3. The wave activated power generating system of above 1 or 2 may also be provided with a folding mechanism which folds and fixes the joint member along the support structure, by pulling the joint member connected to the gyroscopic power generator in the direction of the support structure.

According to the structure of 3, the wave activated power generating system can be folded when generation of power is not necessary, such as during adverse weather or maintenance. This prevents a failure as well as ensures safety.

4. From another aspect, the wave activated power generating system of the present invention includes: at least one gyroscopic wave activated power generator including a floating body, a gyroscope supported by the floating body, and a power generator connected to a gimbal shaft of the gyroscope via an increaser. The gyroscopic wave activated power generator causes a gimbal of the gyroscope to rotate in response to oscillation of the floating body with a wave, and thus driving the power generator to generate power. The wave activated power generating system further includes a large floating body. One end of the gyroscopic wave activated power generator is connected to the large floating body via a universal joint so as to enable the gyroscopic wave activated power generator to swing. The gimbal shaft is provided so that the gyroscopic wave activated power generator and the gimbal shaft oscillate in synchronization with one another.

According to the structure of 4, the large floating body and the gyroscopic wave activated power generator are less likely to move together with waves, thus enabling the large floating body and the gyroscopic wave activated power generator to easily move independently of one another. In other words, a gap is generated between oscillation of the large floating body and oscillation of the gyroscopic wave activated power generator. As a result, an angle of oscillation of the gyroscope becomes larger. Thus, there is provided a wave activated power generating system capable of generating power more efficiently and more economically than ordinary, even in areas of shallow water. Further, this facilitates absorptions of wave energy, thus dissipating a wave.

5. Preferably, the wave activated power generating system of above 4 further includes a brake member. The brake member bridges between a portion of the large floating body and a non-edge part of the gyroscopic wave activated power generator, the portion being between the universal joint and either a leading end or a rear end of the large floating body in a traveling direction of a wave.

The structure described in 5 is able to restrict an extra motion of the gyroscopic wave activated power generator (e.g., motion parallel to the travel direction of waves). This allows more efficient and more economical generation of power than ordinary, even in areas of shallow water. Further, this advances absorption of wave energy, thus efficiently dissipating a wave.

6. Preferably in the wave activated power generating system of above 4 or 5, the large floating body is a bar-shaped floating body long in back/forth direction with respect to a travel direction of a wave. Especially, the large floating body preferably has a buoy on both of its ends, projecting from the body of the large floating body. Thus, there is provided a wave activated power generating system which is easily build, and is capable of generating power more efficiently than ordinary even in areas of either shallow or deep water. This advances absorption of wave energy, thus efficiently dissipating a wave.

7. As another aspect, the wave activated power generating system of above 4 or 5 may adopt the large floating body as a large gyroscopic wave activated power generator including: a floating body; a gyroscope supported by the floating body; and power generator which is connected to a gimbal shaft of the gyroscope via an increaser. The large floating body causes the gimbal of the gyroscope to rotate in response to oscillation of the floating body with a wave, thus driving the power generator to generate power. Further, the floating body has a doughnut shape, which includes in an inner cylindrical part thereof a gyroscope having at least one vertical gimbal shaft.

The structure of above 7 allows usage of the large floating body as a power generator. Thus, there is provided a wave activated power generating system which is capable of generating power more efficiently and more economically than ordinary even in areas of either shallow or deep water. Further, this advances absorption of wave energy, thus efficiently dissipating a wave.

8. Preferably in the wave activated power generating system of above 1 to 7, up/down motion of the gyroscopic wave activated power generator produced when oscillating, is substantially perpendicular to a travel direction of a wave.

The structure of 8 optimizes received wave energy. Thus, the structure of 8 provides a wave activated power generating system which ensures more efficient and more economical generation of power even in areas of shallow water. Further, this advances efficient absorption of wave energy, thus facilitating dissipation of a wave.

9. A wave power plant of the present invention includes a combination of at least one type of the wave activated power generating systems of above 1 to 8.

10. Preferably, the wave power plant of above 9 has the gyroscopic wave activated power generators arranged densely but not to overlap with one another with respect to a travel direction of a wave.

The structure of 9 or 10 optimizes wave energy in a predetermined area. Thus, the structure of 9 or 10 provides a wave power plant capable of generating power more efficiently and more economically than ordinary. Further, this advances efficient absorption of wave energy, thus dissipating waves in a larger area.

BEST MODE FOR CARRYING OUT THE INVENTION

<First Embodiment>

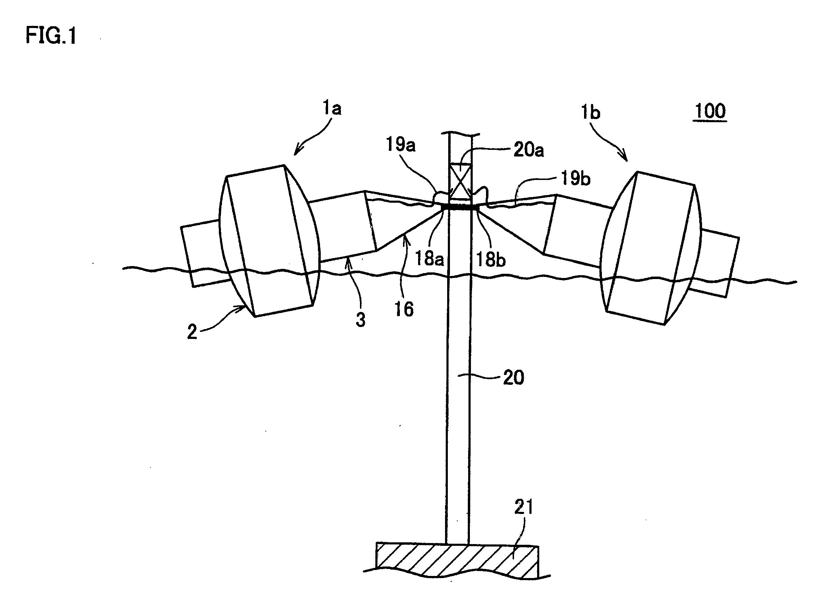

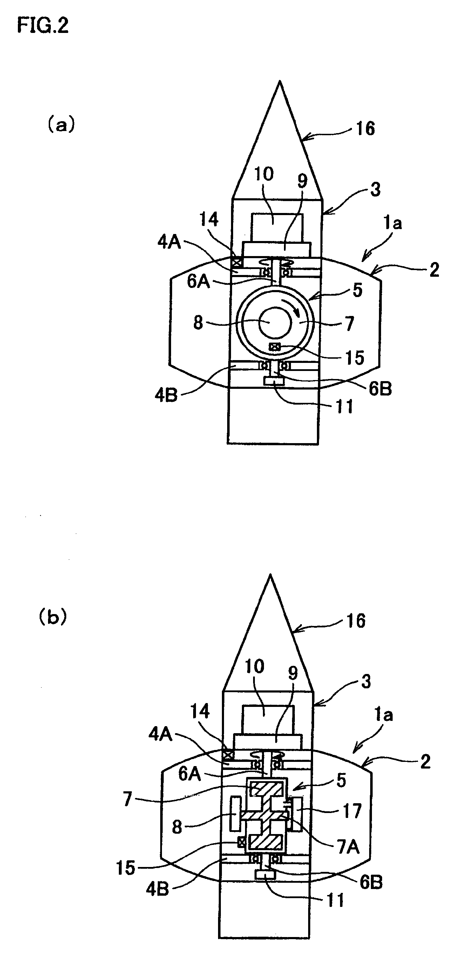

The following describes a wave activated power generating system according to a first embodiment of the present invention. Fig. 1 is a schematic diagram illustrating the wave activated power generating system according to the first embodiment of the present invention. Fig. 2(a) is a full sectional view of a gyroscopic wave activated power generator applied to the wave activated power generating system of Fig. 1. Fig. 2(b) is a full sectional view of the gyroscopic wave activated power generator illustrating a cross section of the flywheel when the gyroscope of Fig. 2 (a) rotates.

As illustrated in Fig. 1, the wave activated power generating system 100 includes two gyroscopic wave activated power generators 1a and 1b, a column 20 (support structure), and a foundation 21. The wave activated power generators 1a and 1b are mounted to the column 20 by one end respectively through universal joints 18a and 18b. A bottom end of the column 20 is fixed to the bottom of water by the foundation 21.

The gyroscopic wave activated power generators 1a and 1b are respectively connected to the universal joints 18a and 18b by one end, so that the gyroscopic wave activated power generators 1a and 1b are able to oscillate in up/down direction as well as in back/forth direction relative to a travel direction of a wave. Further, as illustrated in Figs. 2(a) and 2(b) the gyroscopic wave activated power generator 1a includes: a floating body 2; a gyroscope 5 supported by the floating body 2; and a power generator 10 connected to a gimbal shaft 6 of the gyroscope 5 via an increaser 9. In the gyroscopic wave activated power generator 1a, oscillation of the floating body 2 with a wave produces rotation of a gimbal in the gyroscope 5, thus driving the power generator 10 to generate power. Further, the floating body 2 has a doughnut shape. In an inner cylindrical part 2A thereof, the gyroscope 5 having the gimbal shaft 6 is provided.

The description of the gyroscopic wave activated power generator 1b is omitted here since it has the same structure as that of the gyroscopic wave activated power generator 1a.

The floating body 2, which allows the power generating device to float, has a doughnut shape. The floating body 2 may be a substantial sphere (not illustrated), as a comparative example. The floating body 2 includes the inner cylindrical part 2A slightly longer in up/down direction in the figure, an outer cylindrical part 2B shorter in up/down direction in the figure, and tapered disks 2C which connect the inner cylindrical part 2A and the outer cylindrical part 2B. Thus, in addition to secured predetermined buoyancy, the doughnut-shaped floating body 2 has high strength, rigidity, and isotropy. Further, the floating body 2 is easy to produce. These allow the floating body 2 to evenly oscillate with waves from any direction to generate power. Examples of a production method of the floating body 2 include sheeting, welding, plastic formation or the like. Examples of the material include low carbon steel, stainless steel, FRP, cast metal or the like.

In the inner cylindrical part 2A of the floating body 2 is a cylindrical device housing 3 inserted and fixed. Fixed above the device housing 3 is an arm member 16 attachable to the universal joint 18a. The arm member 16 is arranged to be adequately shorter in the axial direction than half the wavelength of a wave, in order to increase angular velocity of the floating body 2 with respect to a wave motion. For instance, when a wave length of a wave is fifty meters, and a distance between the universal joint 18a and the center of the device housing 3 is three meters, the angular velocity of the floating body 2 is 50 m x (1/2)/3 m = substantially 8 times higher than the angular velocity of a traditional floating body with respect to an up/down motion of a wave. Needless to say, the arm member 16 in this case is preferably sufficiently shorter than three meters. Further, according to the above illustrated angular velocity, each of the gyroscopic wave activated power generators 1a and 1b of the present embodiment generates power by oscillating not only in up/down direction, but also in left/right direction. Thus, assuming that the gyroscopic wave activated power generators 1a and 1b each draws a circular trajectory, each of the gyroscopic wave activated power generators 1a and 1b is able to obtain twice as much power than the power generated by up/down motion only.

Inside the device housing 3 are the gyroscope 5 provided as a principle part at the center, an increaser 9 and a power generator 10 which are provided above the gyroscope 5.

As a comparative example, a not illustrated plumbing pump may be provided to an inner space of the floating body 2, so as to allow ballast such as seawater to get in and out of the inner space of the floating body 2. This structure allows change in a natural frequency of the floating body 2 so as to synchronize the frequencies of the floating body 2 and waves, thus increasing efficiency in power generation in accordance with the amount of ballast water introduced and/or exhausted. The plumbing pump may be provided to the inner space of the floating body 2, or inside the device housing 3.

The principle part mounted on the center is provided with the gyroscope 5 having gimbal shafts 6A and 6B. The upper gimbal shaft 6A is rotatably supported by an upper gimbal shaft pedestal 4A. The lower gimbal shaft 6B is rotatably supported by a lower gimbal shaft pedestal 4B. The upper gimbal shaft 6A is connected to the power generator 10 via the increaser 9 formed with a gear mechanism. As illustrated in Fig. 2(b), a flywheel 7 is rotatably provided about a spin shaft 7A perpendicular to the gimbal shafts 6A and 6B of the gyroscope 5. The flywheel 7 is rotated by a spin motor 8. Further, the pressure inside the flywheel 7 chamber is maintained negative (substantially 0.1 atm or lower) by the vacuum pump 17 provided on a side wall of the gyroscope 5 (gimbal). This decreases resistance and windage loss, thus allows the flywheel 7 to rotate with low friction. When a sealing method (a method of sealing by reducing the pressure inside to negative as in the case of a tire) is adopted as a comparative example, the pressure inside the flywheel 7 chamber is maintained negative for a long time without a vacuum pump. The spin motor 8 and the vacuum pump 17 are connected to a battery (not shown) inside a control box 20a via a cable 19a. The spin motor 8 and the vacuum pump 17 are rotated by power supplied from the battery; however, the spin motor 8 and the vacuum pump 17 may be directly rotated by electric power system.

An oscillation sensor 14 which detects oscillation of the gyroscopic wave activated power generator 1a is provided to an appropriate position such as an upper part of the device housing 3. Further on a side wall of the gyroscope 5 is a gimbal shaft angle sensor 15 (encoder) which detects a rotation angle and attitude of the gyroscope 5. A signal from these sensors enables the oscillation of the floating body 2 to synchronize with the rotation of the gyroscope 5, thus increasing efficiency in power generation. Further, a wave motion is basically circular or elliptical. Thus, a rotation phase of the gyroscope 5 (gimbal) is adjusted to be in synchronization with a wave motion, so that the efficiency in power generation is improved. Further, a symbol 11 indicates a slip ring provided to the gimbal shaft 6B. The slip ring 11 is for supplying power from a battery or the like in the control box 20a to the spin motor 8 provided to a rotation part and transmitting a signal from the gimbal shaft angle sensor 15 (encoder) of the gimbal shaft to the power generator 10 in a stationary part.

Immediately above the part of the column 20 where the universal joints 18a and 18b are provided, is a control box 20a including a battery, an inverter, or the like. The control box 20a is electrically connected to the spin motor 8, the vacuum pump 17 or the like via the cable 19a.

The foundation 21 is a construction made of concrete or the like. The column 20 is fixed to the central part of the foundation 21 so as to be substantially vertical.

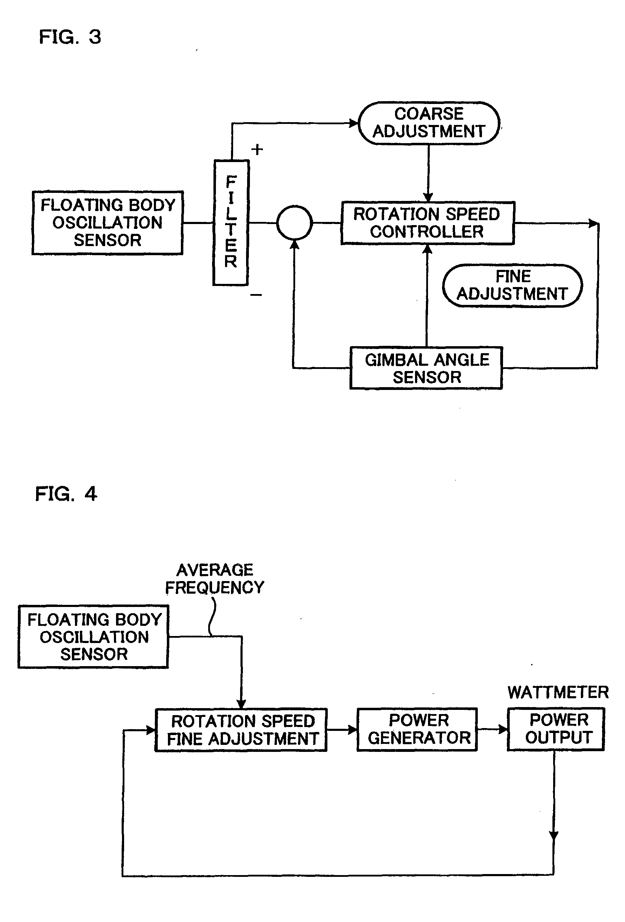

When the gyroscopic wave activated power generators 1a and 1b having such a structure oscillate with a wave, the gimbal shaft 6 rotates due to a gyroscopic effect between the flywheel 7 and the gimbal shaft 6. This is described by the following with reference to the explanatory block diagram of Fig. 3 illustrating a phase control of the gimbal shaft. The floating body oscillation sensor 14 detects oscillation of the floating body 2. The detection signal causes the rotation speed controller of the control box 20a to be coarsely adjusted through a filter. The gimbal angle (axial direction) sensor 15 detects an angle position of the gimbal shaft 6 of the gyroscope 5, and finely adjusts the angle position of the gimbal shaft 6 so as to be at a position which maximizes the amount of power generation. The fine adjustment is carried out constantly, or once every predetermined period of average time. The coarse adjustment control and the fine adjustment control enable the oscillation of the floating body 2 and the rotation of the gyroscope 5 to be in sync with one another. This optimizes the feature of the gyroscope 5, and thus effectively controlling the amount of power generated by the power generator 10.

Fig. 4 is an explanatory block diagram of rotation speed control of the power generator. The average frequency of oscillation of the floating body 2 detected by the floating body oscillation sensor 14 is obtained and the rotation speed of the power generator 10 is coarsely adjusted. Then, the rotation speed controller finely adjusts the rotation speed of the power generator 10 so as to averagely optimize the output from the power generator 10. Thus, the gimbal shaft 6 rotates at a frequency near a principle frequency component of the oscillation of the floating body 2. In other words, the rotation speed control of the power generator 10 is configured to enable automatic search of the rotation speed of the power generator 10 which optimizes the average value of the output from the power generator 10, and to enable the power generator 10 to rotate at the searched rotation speed. The average value of output of the power generator 10 is finely adjusted under coarse adjustment of the rotation speed of the power generator 10, so as to optimize the average value of output of the power generator 10. Thus, it is significantly simplified to control the gyroscope 5 on the power generator 10 side, so that the most effective generation of power is realized automatically.

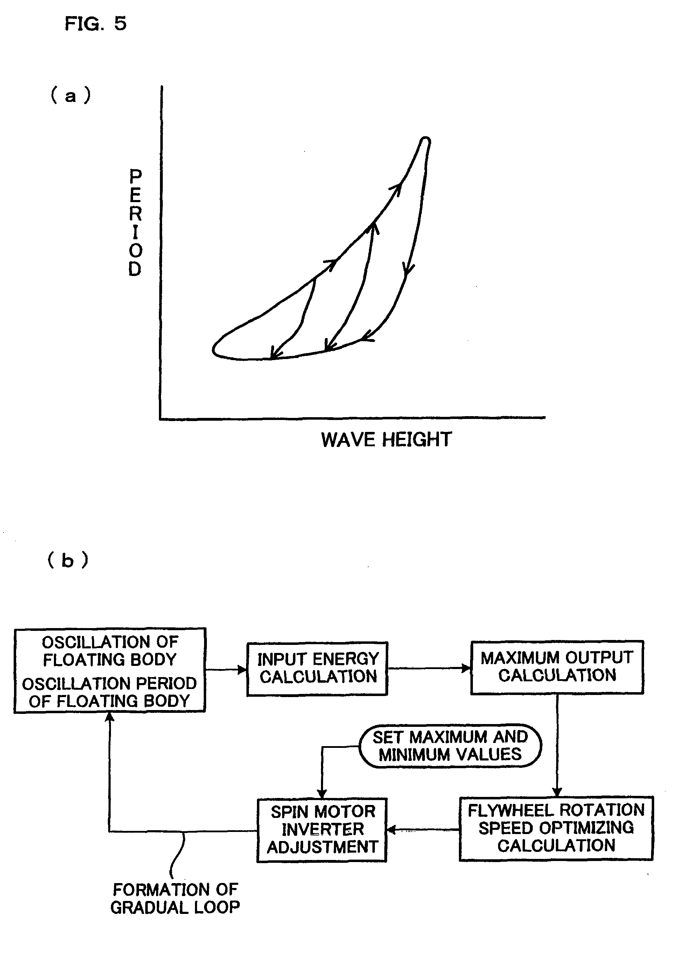

Fig. 5(a) is an explanatory block diagram illustrating a relationship between wave height and a periodic loop obtained by flywheel rotation speed control. Fig. 5(b) is an explanatory block diagram illustrating the flywheel rotation speed control. The flywheel rotation speed control is for controlling the rotation speed of the flywheel 7 of the gyroscope 5, so as to enable the flywheel 7 to adapt to various types of conditions of waves. Measurement data on the wave height and the wave cycle or measurement data on the oscillation is obtained with a detection signal from the oscillation sensor 14. Input energy is calculated by substituting the data into the equation $R(H^2T/2)$ (T: period of wave, H: waveheight, R: coefficient). Then, maximum output calculation is carried out. When the wave activated power generating system is to be operated at the output near the resulting maximum output, the spin motor 8 optimizes the rotation speed of the flywheel 7 in the gyroscope 5. This enables an operation of the power generator under an optimum operating condition with respect to various types of waves, in order to maintain high power generation efficiency.

According to the wave activated power generating system 100 having the above structure, the gyroscopic wave activated power generator moves in accordance with wave movements, not only in up/down direction, but in back/forth direction relative to a travel direction of a wave. This allows more efficient and more economical generation of power than ordinary. Further, the wave activated power generating system 100 absorbs wave energy, which allows usage of the wave activated power generating system 100 to dissipate a wave.

<A Modified Example of the First Embodiment>

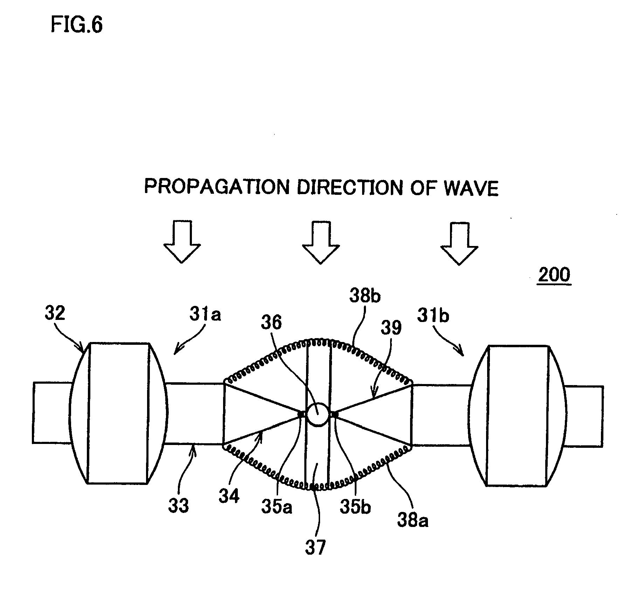

The following describes the wave activated power generating system according to a comparative example of the first embodiment of the present invention next. Fig. 6 illustrates the wave activated power generating system according to the comparative example of the first embodiment of the present invention, viewed from directly above. Further, members numbered 1a, 1b, 2, 3, 16, 18a, 18b, and 20 in the first embodiment are numbered 31a, 31b, 32 to 34, 35a, 35b, and 36, respectively, and the descriptions of those members may be omitted here.

A wave activated power generating system 200 according to the comparative example of the first embodiment differs from the wave activated power generating system 100 of the first embodiment in that the former includes a short bar 37 fixed above universal joints 35a and 35b, and springs 38a and 38b (brake members) which respectively bridge from two sections of an arm member 34 of the gyroscopic wave activated power generator 31a to two sections of an arm member 39 of the gyroscopic wave activated power generator 31b. Each of the springs 38a and 38b has a symmetrical shape with a column 36 as the center of symmetry. The gyroscopic wave activated power generators 31a and 31b have the same structure as the gyroscopic wave activated power generators 1a and 1b.

Tensile force is applied to the spring 38b towards offshore. Thus, the spring 38b is provided on the offshore side (direction which a wave comes from) of the wave activated power generating system 200. Thus, the gyroscopic wave activated power generators 31a and 31b are able to restrict an extra motion (oscillation with a wave) or an extra motion (motion by which the center (equilibrium) becomes offset) caused by waves. Further, the tensile force of the springs 38a and 38b is adjusted so that the up/down motion of the gyroscopic wave activated power generators 31a and 31b made when oscillating, is maintained substantially perpendicular to a travel direction of a wave.

According to the wave activated power generating system 200, extra motions of the gyroscopic wave activated power generators 31a and 31b are restricted (e.g., a motion parallel to a travel direction of a wave is controlled to be within a predetermined range). Thus, the wave activated power generating system 200 is capable of generating power far more efficiently and economically than the wave activated power generating system 100 of the first embodiment. Further, the wave activated power generating system 200 efficiently absorbs wave energy. Thus, a wave is efficiently dissipated. These effects are produced especially when the tensile force of the springs 38a and 38b is adjusted so that the up/down motion of the gyroscopic wave activated power generators 31a and 31b made when oscillating, is maintained substantially perpendicular to a travel direction of a wave.

The comparative example illustrates a case where the bar 37 is horizontally fixed above the universal joints 35a and 35b; however, the bar 37 may be horizontally fixed below the universal joints 35a and 35b.

<Second Embodiment >

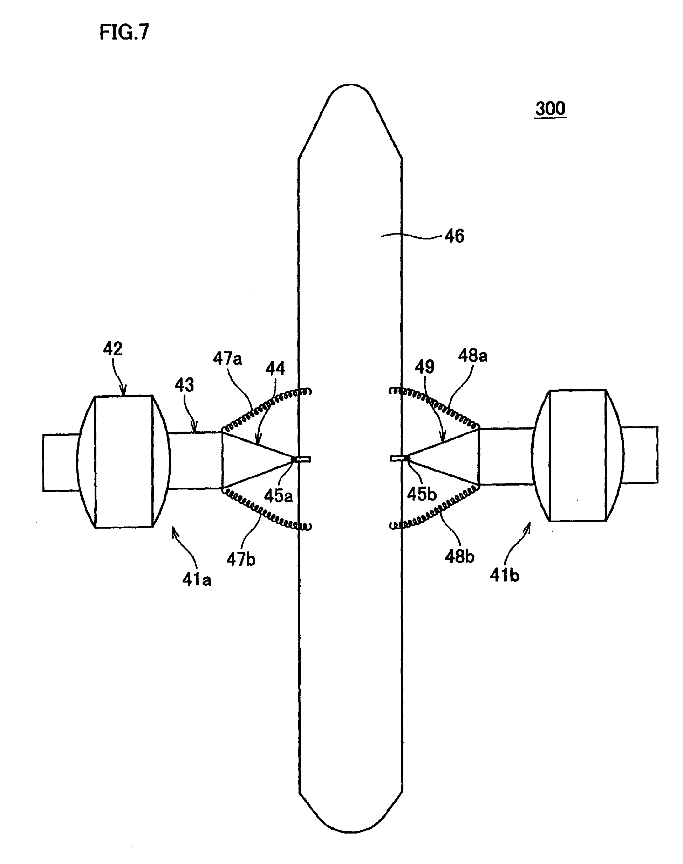

The following describes a wave activated power generating system according to a second embodiment of the present invention next. Fig. 7 illustrates the wave activated power generating system according to the second embodiment of the present invention, viewed from directly above. Further, members numbered 1a, 1b, 2, 3, 16, 18a, and 18b in the first embodiment are numbered 41a, 41b, 42 to 44, 45a, and 45b, respectively, and the descriptions of those members may be omitted here.

A wave activated power generating system 300 of the second embodiment differs from the wave activated power generating system 100 in that the former adopts: (1) a large floating body 46 floating in the water instead of the column 20 of the first embodiment fixed to the bottom; (2) springs 47a and 47b which respectively bridge from two sections of an end of an arm member 44 of a gyroscopic wave activated power generator 41a to non-edge parts of the large floating body 46; and (3) springs 48a and 48b which respectively bridge from two sections of an end of an arm member 49 of an gyroscopic wave power generator 41b to non-edge parts of the large floating body 46. The gyroscopic wave activated power generators 41a and 41b have the same structures as the gyroscopic wave activated power generators 1a and 1b.

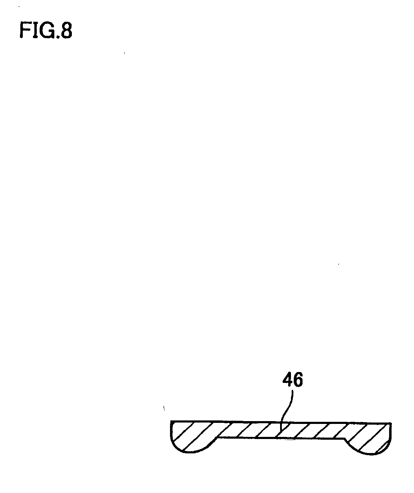

The large floating body 46 has protrusions for buoyancy on bottom surfaces at leading and trailing ends, as illustrated in Fig. 8. Such a shape differentiates oscillation of the large floating body 46 from oscillation of the gyroscopic wave activated power generators 41a and 41b (i.e. phase shift is introduced). Thus, the gyroscopic wave activated power generators 41a and 41b are able to operate normally. Especially when the large floating body 46 is large (including a case where the large floating body 46 is long), a desirable oscillation gap is generated between the center of the large floating body 46 and the gyroscopic wave activated power generators 41a and 41b. Note that universal joints 45a and 45b can be connected to a side surface of the central portion of the large floating body 46.

According to the above structure, the large floating body 46 and the gyroscopic wave activated power generators 41a and 41b are less likely to move together. This facilitates each of the large floating body 46 and the gyroscopic wave activated power generators 41a and 41b to move independently. In other words, a gap is generated between oscillation of the large floating body 46 and oscillation of the gyroscopic wave activated power generators 41a or 41b. As a result, the wave activated power generating system 300 is provided, which is capable of generating power more efficiently and more economically than ordinary even in areas of shallow water. Further, the wave activated power generating system 300 absorbs wave energy, which allows usage of the wave activated power generating system 300 to dissipate a wave.

Further, extra motions of the gyroscopic wave activated power generators 41a and 41b are restricted (e.g., movements parallel to a travel direction of a wave are restricted within a predetermined range). Thus, the wave activated power generating system 300 is capable of generating power even more efficiently and more economically than the wave activated power generating system 100 of the first embodiment. Further, the wave activated power generating system 300 efficiently absorbs wave energy, thus dissipating a wave more efficiently. These effects are produced especially when the tensile force of the springs 48a and 48b is adjusted so that up/down motion made when the gyroscopic wave activated power generators 41a and 41b oscillate is maintained substantially perpendicular to a travel direction of a wave.

<Third Embodiment>

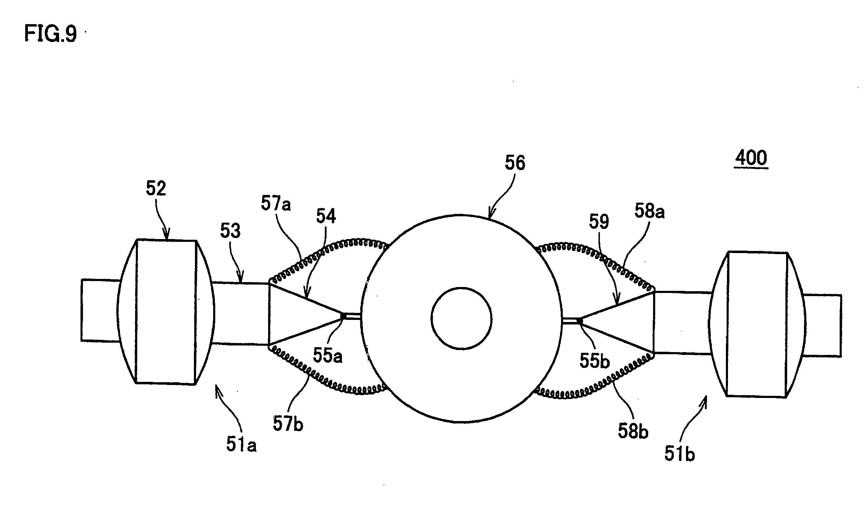

The following describes a wave activated power generating system according to a third embodiment of the present invention next. Fig. 9 illustrates the wave activated power generating system according to the third embodiment of the present invention, viewed directly from above. Further, members numbered 1a, 1b, 2, 3, 16, 18a, and 18b in the first embodiment are numbered 41a, 41b, 42 to 44, 35a, and 45b, respectively, and the descriptions of those members may be omitted here.

The wave activated power generating system 400 according to the third embodiment differs from the wave activated power generating system 100 in that the former adopts: (1) a large gyroscopic wave activated power generator 56 (large floating body) floating in the water, instead of the column 20 of the first embodiment fixed to the bottom; (2) springs 57a and 57b which bridge from two sections of an end of an arm member 54 of an gyroscopic wave activated power generator 51a to non-edge sections of the large gyroscopic wave activated power generator 56; and (3) springs 58a and 58b which bridge from two sections of an end of an arm member 59 of a gyroscopic wave activated power generator 51b to non-edge sections of the large gyroscopic wave power generator 56. The gyroscopic wave activated power generators 51a and 51b have the same structures as the gyroscopic wave activated power generators 1a and 1b.

The large gyroscopic wave activated power generator 56 includes a vertical gimbal shaft, and has the same form and members as the gyroscopic wave activated power generator 1a; however, the large gyroscopic wave activated power generator 56 is larger than the gyroscopic wave activated power generator 1a. Note that the gyroscopic wave activated power generator 56 does not have an arm member as provided to the gyroscopic wave activated power generator 1a; however, universal joints 55a and 55b are connectable to a side surface of the gyroscopic wave activated power generator 56.

In the above structure, not only do the gyroscopic wave activated power generators 51a and 51b generate power, but also the large floating body serving as the large gyroscopic wave activated power generator 56. Thus, there is provided a wave activated power generating system 400 capable of generating power more efficiently and more economically than ordinary even in areas of either shallow or deep water. Further, the wave activated power generating system 400 absorbs wave energy, thus efficiently dissipating a wave.

Further, extra motions of the gyroscopic wave activated power generators 51a and 51b are restricted (e.g.,

motions parallel to a travel direction of a wave are controlled to be in a predetermined range). Thus, the wave activated power generating system 400 is able to generate power even more efficiently and economically than the wave activated power generating system 100 of the first embodiment. Further, the wave activated power generating system 400 efficiently absorbs wave energy, thus efficiently dissipating a wave. These effects are produced especially when tensile force of the springs 58a and 58b is adjusted so that up/down motion made when the gyroscopic wave activated power generators 51a and 51b oscillate is maintained substantially perpendicular to a travel direction of a wave.

<Fourth Embodiment >

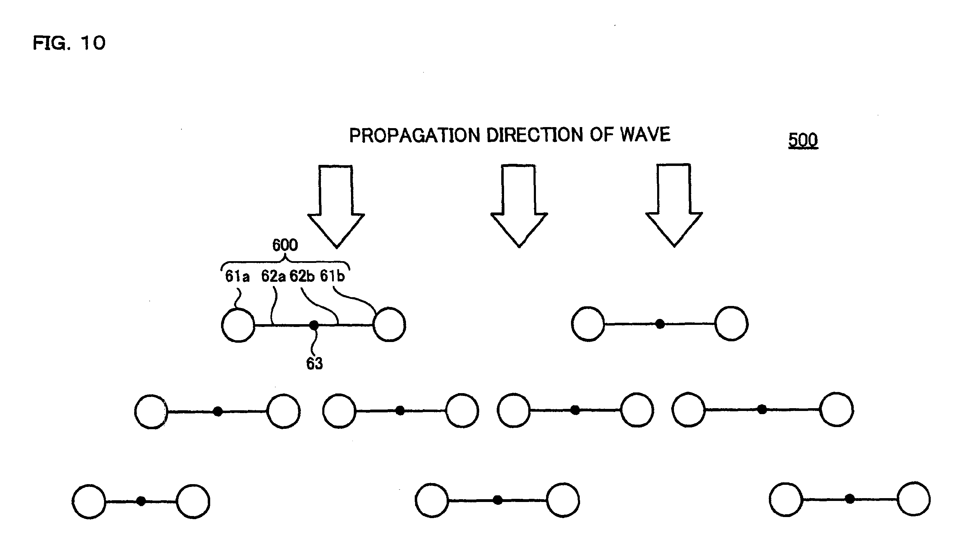

The following describes a wave power plant according to a fourth embodiment of the present invention next. Fig. 10 is a pattern diagram illustrating the wave power plant according to the fourth embodiment of the present invention.
The wave power plant 500 is constructed by combining plural wave activated power generating systems 600 (although not detailed, the wave activated power generating system 600 has the same structure as the wave activated power generating system 100). Each of the wave activated power generating systems 600 includes gyroscopic wave activated power generators 61a and 61b connected to a column 63 fixed to the bottom of water via arm members 62a and 62b, respectively. The gyroscopic wave activated power generators ( "O"s in Fig. 10) are arranged densely but not to overlap with nearby gyroscopic wave activated power generators with respect to a travel direction of a wave.
The above structure maximally exploit wave energy in an area where the wave power plant 500 is provided. Thus, there is provided a wave power plant capable of generating power more efficiently and more economically than ordinary in areas of shallow water. Further, wave energy in an area where the wave power plant 500 is provided is efficiently absorbed, so that waves are dissipated in a larger area.
The present embodiment adopts wave activated power generating systems 600 each of which having the same structure as the wave activated power generating system 100 of the first embodiment. However, the present embodiment may alternatively adopt any one of or a proper combination of the wave activated power generating systems according to comparative example of the first embodiment, the second embodiment, and the third embodiment. Needless to say, the present embodiment may combine the wave activated power generating system 100 of the first embodiment, with at least one of the wave activated power generating systems according to the comparative example of the first embodiment, the second embodiment, and the third embodiment. These also produce the same effects as the fourth embodiment by arranging the gyroscopic wave activated power generators densely but not to overlap with one another with respect to a travel direction of a wave. Note that when the wave activated power generating systems of the second or the third embodiment are adopted, the wave activated power generating systems may be tied down to a pedestal or the like so as not to be swept away.
Although not illustrated, the wave activated power generating systems according to the comparative example of the first embodiment, the second embodiment, and the third embodiment may include parts having the same functions as the control box 20a and the cables 19a and 19b.

[Example]

The gyroscopic wave activated power generator adopted in each of the above embodiments responds to rotary motions around plural axes due to waves. In the present example, a simulation verifies a behavior of the gyroscopic wave activated power generators adopted in each of the embodiments when responding to oscillation about two axes, i.e. horizontal and vertical axes.

(Method of Simulation)

[Equation 1]

The simulation was run by using Simulink (simulation software by Cybernet Systems Co., Ltd), in a Matlab environment substituting wave of various amplitudes but of the same frequency for the $\phi$ and $\psi$ of the equation of motion:

$$(J + I_{Gx} - J_s - I_{Gz})(\dot{\phi}\sin\theta + \dot{\psi}\cos\theta)(\dot{\phi}\cos\theta - \dot{\psi}\sin\theta) +$$
$$- J_s\omega_s(\dot{\phi}\cos\theta - \dot{\psi}\sin\theta) + (J + I_{Gy})\ddot{\theta} - K_G\sin\theta + C_G\dot{\theta} = 0$$

The below Table 1 indicates a value of each parameter used in the simulation of the present embodiment. These values of the parameters are set as an example in the simulation of the present embodiment. The x and y axes of the gimbal are parallel to the plane of the gimbal. The z-axis is in the center axial direction of the gimbal. Values of

$K_M$ and $C_M$ of the below Fig. 1 respectively substitute $K_G$ and $C_G$ in the above equation. Here, $K_M$ and $C_M$ indicate the following. A motor is connected to the gimbal in practice and this motor does not exert a restoring force. Thus, the motor functions as a brake when $K_M=0$. Therefore, $C_M$ in the simulation of the present embodiment has a value of the parameter accommodating this.

[Table 1]

| | |
|---|---|
| Polar moment of inertia of flywheel Js[kg·m$^2$] | 0.88 |
| Lateral moment of inertia of flywheel J[kg·m$^2$] | 0.45 |
| Moment of inertia of gimbal about x-axis $I_{Gx}$[kg·m$^2$] | 0.32 |
| Moment of inertia of gimbal about y-axis $I_{Gy}$[kg·m$^2$] | 0.92 |
| Moment of inertia of gimbal about z-axis $I_{Gz}$[kg·m$^2$] | 0.99 |
| Rotation spring modulus of gimbal $K_M$[N·m/rad] | 0 |
| Viscous damping coefficient of gimbal $C_M$[N·m/rad] | 0.59 |

(Result of the Simulation)

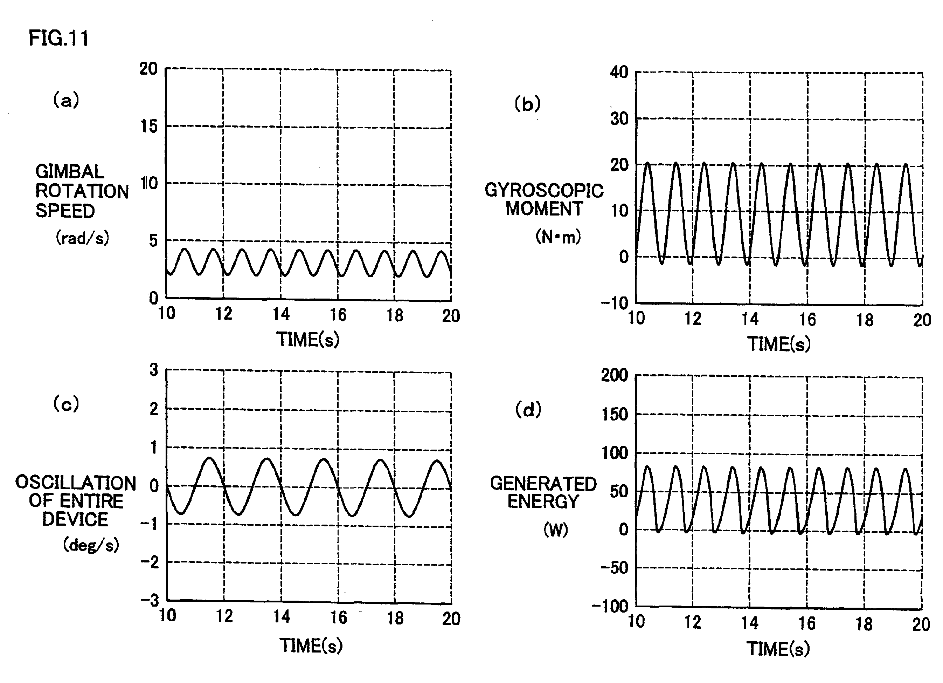

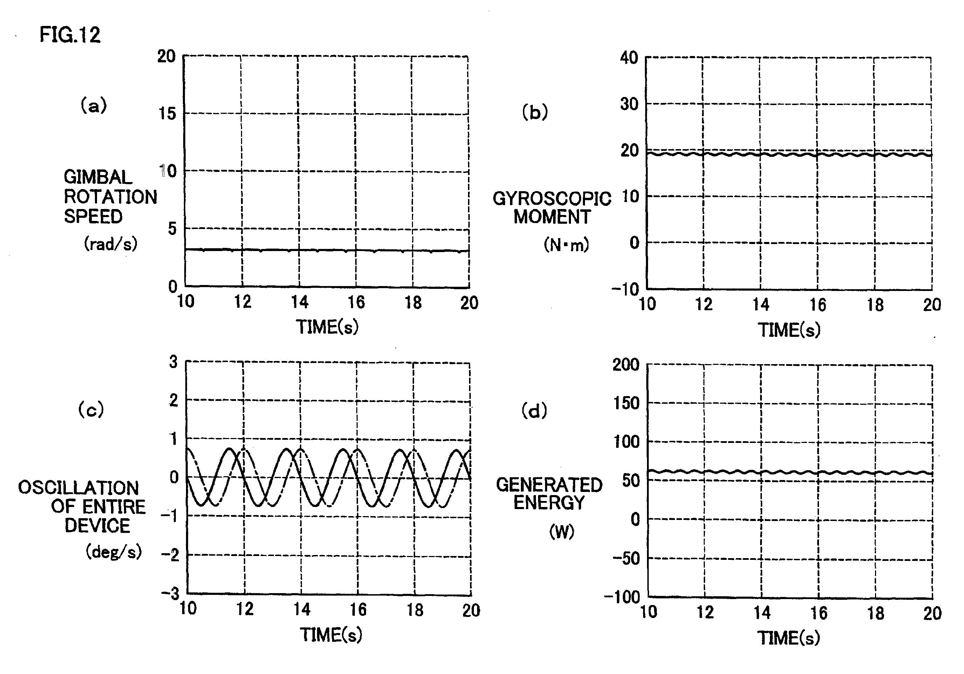

Fig. 11 and Fig. 12 respectively illustrate simulation results of: (1) applying oscillation only in one direction to the gyroscopic wave activated power generator as a comparative example (condition: oscillation frequency 0.5 Hz, horizontal oscillation 0.3 m, vertical oscillation 0 m); and (2) applying a circular motion (condition; oscillation frequency 0.5 Hz, horizontal oscillation 0.3 m, vertical oscillation 0.3 m) as an example of the present invention. Note that what each of the graphs in Fig. 11 and Fig. 12 indicates is as described by the below equation.

[Equation2]

$$\text{Rotation speed of gimbal} : \dot{\theta}[rad/\sec]$$

$$\text{Gyroscopic moment} : J_s\omega_s(\dot{\phi}\cos\theta - \dot{\psi}\sin\theta)[N\cdot m]$$

$$\text{Oscillation of the entire device} : \dot{\phi}, \dot{\psi}$$

$$\text{Generated energy} : J_s\omega_s\dot{\theta}(\dot{\phi}\cos\theta - \dot{\psi}\sin\theta)[W]$$

Two axes are set as A-axis and B-axis in oscillation of the entire device (graphs of Fig. 11(c) and Fig. 12 (c)). Oscillation about the A-axis and oscillation about the B-axis are respectively set as $\psi$ and $\phi$, and indicated with a solid line and a broken line, respectively.

(Verification Result)

It is understood that when oscillation in one direction as described in above (1) is applied, a gyroscopic moment is generated in each half cycle of the oscillation of the device. Accordingly, two power generating operations take place per one oscillation cycle of the device. It is also understood that when a circular motion as described in above (2) is applied, more stable rotation speed and gyroscope moment, as well as energy thus generated are obtained, compared to the case where oscillation in only one direction as described in above (1) is applied. Thus, it is understood that the present invention which utilizes circular or elliptical motions about two axes clearly generates power more efficiently than a traditional device which only utilizes oscillation in one direction.

Further, the design of the present invention may be changed within the scope of the claims. Thus, the present invention is not limited to the above embodiments or examples. For instance in the first embodiment, a folding mechanism may be provided, which has a joint member such as a wire connected to the gyroscopic power generator, and pulls the wire in the direction of the support structure to fold and fix the gyroscopic power generator along the support structure. The following describes the example.

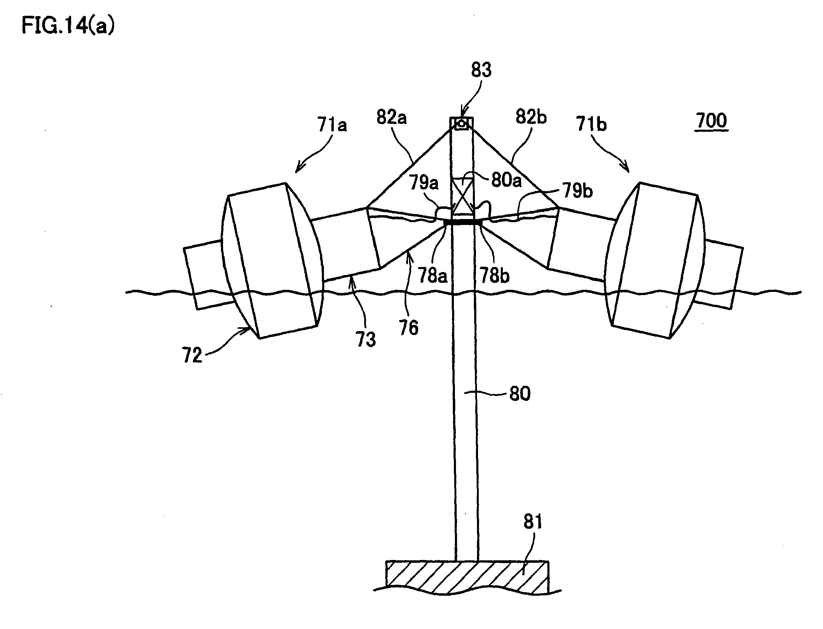

The wave activated power generating system 700 illustrated in Fig. 14 (a) differs from the wave activated power generating system 100 of the first embodiment in that the former includes a folding mechanism having wires 82a and 82b and a winch 83. The wires 82a and 82b are respectively connected to the gyroscopic wave activated power generators 71a and 71b by one end. The other ends of the wires 82a and 82b are connected to the winch 83 so that the wires 82a and 82b can be winded up thereto. The gyroscopic wave activated power generators 71a and 71b have the same structure as the gyroscopic wave activated power generators 1a and 1b. Further, members numbered 1a, 1b, 2, 3, 16, 18a, 18b, 19a, 19b, 20, and 21 in the first embodiment are numbered 71a, 71b, 72 to 73, 76, 78a, 78b, 79a, 79b, 80, and 81, respectively, and the descriptions of those members may be omitted here.

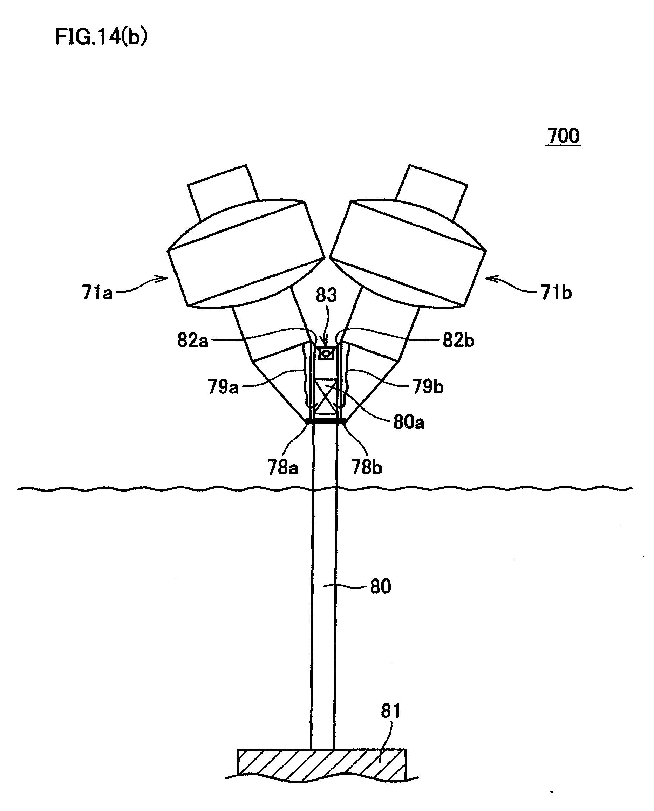

The wave activated power generating system 700 having such a structure produces the same effects as those produced by the first embodiment. Further, the winch 83 is driven to wind up the wires 82 and 82b, thus pulling up the gyroscopic wave activated power generators 71a and 71b to around the upper end of the column 80 to fold, as illustrated in Fig. 14(b). Accordingly, the gyroscopic wave activated power generators 71a and 71b can fold when generation of power is unnecessary such as during maintenance or when whether is bad. This prevents a failure as well as ensures safety.

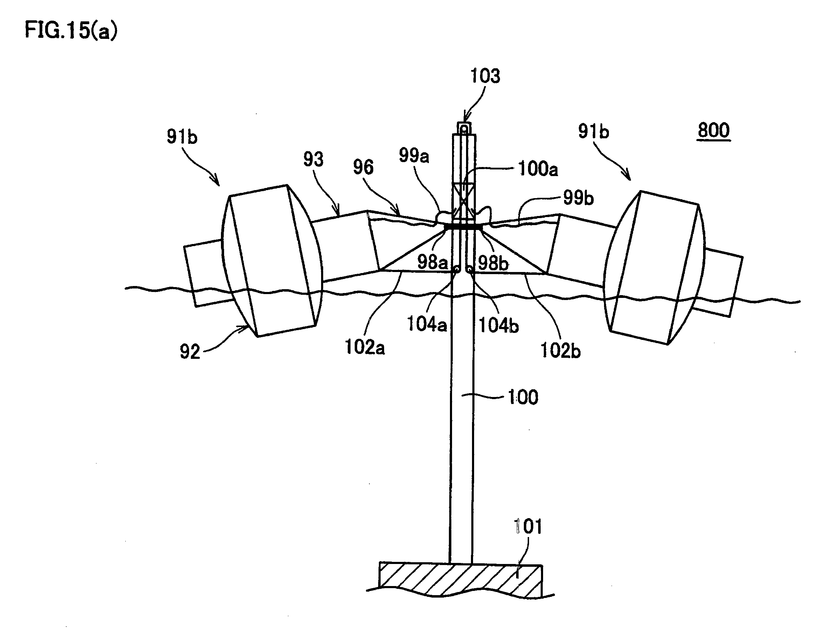

The wave activated power generating system 800 illustrated in Fig. 15 (a) differs from the wave activated power generating system 100 of the first embodiment in that the former includes a folding mechanism having wires 98a and 98b and a winch 103. The wires 98a and 98b are respectively connected to gyroscopic wave activated power generators 91a and 91b by one end. The other ends of the wires 98a and 98b are connected to the winch 103 via axes 104a and 104b provided to a non-edge part of the column 100 (below control box 100a but above the water surface), respectively, so as to allow the wires 98a and 98b to be winded up to the winch 103. The gyroscopic wave activated power generators 91a and 91b have the same structure as the gyroscopic wave activated power generators 1a and 1b. Further, members numbered 1a, 1b, 2, 3, 16, 18a, 18b, 19a, 19b, 20, and 21 in the first embodiment are numbered 91a, 91b, 92, 93, 96, 98a, 98b, 99a, 99b, 100, and 101, respectively, and the descriptions of those members may be omitted here.

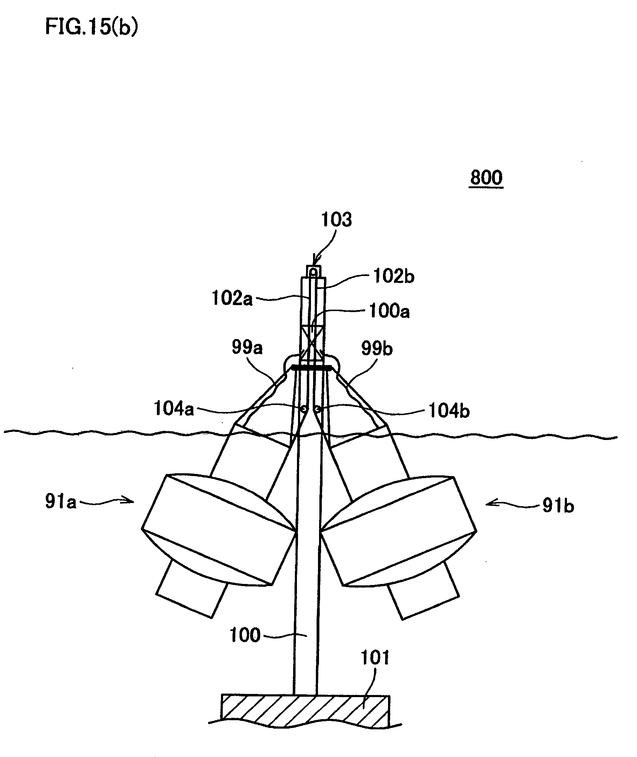

The wave activated power generating system 800 having such a structure produces the same effects as those produced by the first embodiment. Further, the winch 103 is driven to wind up the wires 104a and 104b, thus pulling down the gyroscopic wave activated power generators 91a and 91b along the column 100 to fold in the direction towards the bottom of water, as illustrated in Fig. 15(b). Thus, the wave activated power generating system 800 can fold as the wave activated power generating system 700 illustrated in Fig. 14(a) when generation of power is unnecessary such as during maintenance or when whether is bad. This prevents a failure as well as ensures safety.

BRIEF DESCRIPTION OF THE DRAWINGS

Fig. 1 is a schematic diagram illustrating a wave activated power generating system according to a first embodiment of the present invention.
Fig. 2(a) is a full sectional view of a gyroscopic wave activated power generator of the wave activated power generating system of Fig. 1.
Fig. 2 (b) is a full sectional view of the gyroscopic wave activated power generator illustrating the flywheel in cross section when the gyroscope of Fig. 2 (a) rotates.
Fig. 3 is an explanatory block diagram of gimbal shaft phase control in the wave activated power generating system of Fig. 1.
Fig. 4 is an explanatory block diagram of power generator rotation speed control in the wave activated power generating system of Fig. 1.
Fig. 5(a) illustrates a relationship between wave height and a periodic loop obtained by flywheel rotation speed control in the wave activated power generating system of Fig. 1.
Fig. 5 (b) is an explanatory diagram illustrating the flywheel rotation speed control in the wave activated power generating system of Fig. 1.
Fig. 6 is a plan view of the wave activated power generating system according to a comparative example of a first embodiment of the present invention.
Fig. 7 is a plan view of a wave activated power generating system according to a second embodiment of the present invention.
Fig. 8 is a side sectional view of a large floating body of the wave activated power generating system according to the second embodiment of the present invention.
Fig. 9 is a plan view of a wave activated power generating system according to a third embodiment of the present invention.
Fig. 10 is a pattern diagram illustrating a wave power plant according to a fourth embodiment of the present invention.
Fig. 11 is a graph illustrating a simulation result of a comparative example.
Fig. 12 is a graph illustrating a simulation result of an example of the present invention.
Fig. 13(a) is a pattern diagram illustrating that a trajectory of a wave is circle in areas of deep water.
Fig. 13(b) is a pattern diagram illustrating that a trajectory of a wave is elliptical in areas of shallow water.
Fig. 14 (a) is a schematic diagram of a wave activated power generating system illustrating a comparative example of the first embodiment, where (a) illustrates the unfolded gyroscopic wave activated power generators, and (b) illustrates the gyroscopic wave activated power generators folded in an upper direction.

Fig. 14(b) illustrates the gyroscopic wave activated power generators of the wave activated power generating system of Fig. 14 (a) folded in the upward direction.

Fig. 15(a) is a schematic diagram of the wave activated power generating system illustrating one comparative example of the first embodiment, which illustrates the unfolded gyroscopic wave activated power generators.

Fig. 15(b) illustrates the gyroscopic wave activated power generators of the wave activated power generating system of Fig. 15(a) folded in the direction of the bottom of water.

REFERENCE NUMERALS

1a, 1b, 31a, 31b, 41a, 41b, 51a, 51b, 61a, 61b, 71a, 71b, 91a, 91b: GYROSCOPIC WAVE ACTIVATED POWER GENERATOR
2: FLOATING BODY
2A: INNER CYLINDRICAL PART
2B: OUTER CYLINDRICAL PART
2C: TAPERED DISK
3, 33, 43, 53, 73, 93: DEVICE HOUSING
4A: UPPER GIMBAL SHAFT PEDESTAL
4B: LOWER GIMBAL SHAFT PEDESTAL
5: GYROSCOPE
6, 6A, 6B: GIMBAL SHAFT
7: FLYWHEEL
7A: SPIN SHAFT
8: SPIN MOTOR
9: INCREASER
10: ELECTRIC GENERATOR
14: OSCILLATION SENSOR
15: ANGLE SENSOR OF GIMBAL SHAFT
16, 34, 39, 44, 49, 54, 59, 62a, 62b, 76, 96: ARM MEMBER
17: VACUUM PUMP
18a,18b,35a,35b,45a,45b,55a,55b,78a,78b,98a,98b: UNIVERSAL JOINT
19a, 19b, 79a, 79b, 99a, 99b: CABLE
20a, 80a, 100a: CONTROL BOX
20, 36, 37, 63, 80, 100: COLUMN
21, 81, 101: FOUNDATION
38a, 38b, 47a, 47b, 48a, 48b, 57a, 57b, 58a, 58b: SPRING
46: LARGE FLOATING BODY
56: LARGE GYROSCOPIC WAVE ACTIVATED POWER GENERATOR
100, 200, 300, 400, 600, 700, 800: WAVE ACTIVATED POWER GENERATING SYSTEM
500: WAVE POWER PLANT

**Claims**

1. A wave activated power generating system comprising:

   a gyroscopic wave activated power generator (1a, 1b) including: a floating body (2) ; a gyroscope (5) supported by the floating body; and a power generator connected to a gimbal shaft (6A) of the gyroscope via an increaser (9), which gyroscopic wave activated power generator allows a gimbal of the gyroscope to rotate in response to oscillation of the floating body with a wave, thus driving the power generator to generate power; and
   a support structure (20, 21) whose one end is fixed to the bottom of water while the other end extends out of the water, wherein
   one end of the gyroscopic wave activated power generator is fixed to the support structure via a universal joint (18a, 18b), enabling the gyroscopic wave activated power generator to oscillate, and wherein
   the gimbal shaft is provided so that the gyroscopic wave activated power generator and the gimbal shaft oscillate in sync with one another.

2. The wave activated power generating system according to claim 1 further comprising a bar (37) fixed to the support structure above or below the universal joint, andabrakemember (38a, 38b) which bridges between a non-center part of the bar and a non-edge part of the gyroscopic wave activated power generator.

3. The wave activated power generating system according to claim 1 or 2 further comprising a folding mechanism (98a, 98b, 103) which pulls a joint member connected to the gyroscopic wave activated power generator in the direction of the support structure, to fold and fix the gyroscopic wave activated power generator along the support structure.

4. A wave activated power generating system comprising:

a gyroscopic wave activated power generator (41a, 41b, 51a, 51b) including: a floating body (42); a gyroscope (5) supported by the floating body; and a power generator (10) connected to a gimbal shaft (6A) of the gyroscope via an increaser (9), which gyroscopic wave activated power generator allows a gimbal of the gyroscope to rotate in response to oscillation of the floating body with a wave, thus driving the power generator to generate power; and
a large floating body (46, 56), wherein
one end of the gyroscopic wave activated power generator is connected to the large floating body via a universal joint (45a, 45b, 55a, 55b), enabling the gyroscopic wave activated power generator to oscillate, and
the gimbal shaft (6A) is provided so that the gyroscopic wave activated power generator and the gimbal shaft oscillate in sync with one another.

5. The wave activated power generating system according to claim 4 further comprising: a brake member (47, 48, 57, 58) which bridges between a portion of the large floating body (46, 56) and a non-edge part of the gyroscopic wave activated power generator, the portion being between the universal joint and either a leading end or a rear end of the large floating body in a traveling direction of a wave.

6. The wave activated power generating system according to claim 4 or 5, wherein the large floating body (46) is a bar-shaped floating body which is long in a travel direction of a wave.

7. The wave activated power generating system according to claim 4 or 5, wherein
the large floating body (56) serves as a large gyroscopic wave activated power generator including: a floating body; a gyroscope supported by the floating body; and a power generator connected to a gimbal shaft of the gyroscope via an increaser, and which allows a gimbal of the gyroscope to rotate in response to oscillation of the floating body with a wave, thus driving the power generator to generate power, and wherein
the floating body has a doughnut shape and includes in an inner cylindrical part thereof the gyroscope having a vertical gimbal shaft.

8. The wave activated power generating system according to claim 1 or 4, wherein a direction of an up/down motion made when the gyroscopic wave activated power generator (1a, 1b) oscillates is substantially perpendicular to a travel direction of a wave.

9. A wave power plant comprising:

a combination of more than one of the wave activated power generating systems (1a, 1b) according to claim 1 and 4.

10. The wave power plant according to claim 9 wherein the more than one gyroscopic wave activated power generators (1a, 1b) are arranged densely but not to overlap with one another in a travel direction of a wave.

**Patentansprüche**

1. Wellenaktivierte Stromerzeugungsanlage, umfassend:

einen gyroskopischen wellenaktivierten Stromerzeuger (1a, 1 b), umfassend: einen Schwimmkörper (2), ein Gyroskop (5), das vom Schwimmkörper getragen wird, und einen Stromerzeuger, der mit einer Kardanwelle (6A) des Gyroskops über eine Übersetzung (9) verbunden ist, wobei der gyroskopische wellenaktivierte Stromerzeuger eine Rotation einer Kardanaufhängung des Gyroskops als Reaktion auf die Oszillation des Schwimmkörpers mit einer Welle ermöglicht, wodurch der Stromerzeuger zum Erzeugen von Energie angetrieben wird, und

ein Stützaufbau (20, 21), dessen ein Ende am Boden des Gewässers befestigt ist, während das andere Ende sich aus dem Wasser heraus erstreckt, wobei

ein Ende des gyroskopischen wellenaktivierten Stromerzeugers am Stützaufbau über ein Kardangelenk (18a, 18b) befestigt ist, was es dem gyroskopischen wellenaktivierten Stromerzeuger ermöglicht, zu oszillieren, und wobei

die Kardanwelle so bereitgestellt wird, dass der gyroskopische wellenaktivierte Stromerzeuger und die Kardanwelle synchron miteinander oszillieren.

2. Wellenaktivierte Stromerzeugungsanlage nach Anspruch 1, die ferner einen Stab (37), der am Stützaufbau oberhalb oder unterhalb des Kardangelenks befestigt ist, und ein Bremselement (38a, 38b) umfasst, das einen nichtzentralen Teil des Stabs und einen Nichtkantenteil des gyroskopischen wellenaktivierten Stromerzeugers überbrückt.

3. Wellenaktivierte Stromerzeugungsanlage nach Anspruch 1 oder 2, die ferner einen Faltmechanismus (98a, 98b, 103) umfasst, der ein Gelenkelement, welches mit dem gyroskopischen wellenaktivierten Stromerzeuger verbunden ist, in Richtung des Stützaufbaus zieht, um den gyroskopischen wellenaktivierten Stromerzeuger entlang des Stützaufbaus zu falten und zu befestigen.

4. Wellenaktivierte Stromerzeugungsanlage, umfassend:

einen gyroskopischen wellenaktivierten Stromerzeuger (41 a, 41 b, 51 a, 51 b), umfassend: einen Schwimmkörper (42), ein Gyroskop (5), das vom Schwimmkörper getragen wird, und einen Stromerzeuger (10), der mit einer Kardanwelle (6A) des Gyroskops über eine Übersetzung (9) verbunden ist, wobei der gyroskopische wellenaktivierte Stromerzeuger eine Rotation einer Kardanaufhängung des Gyroskops als Reaktion auf die Oszillation des Schwimmkörpers mit einer Welle ermöglicht, wodurch der Stromerzeuger zum Erzeugen von Energie angetrieben wird, und

einen großen Schwimmkörper (46, 56), wobei

ein Ende des gyroskopischen wellenaktivierten Stromerzeugers mit dem großen Schwimmkörper über ein Kardangelenk (45a, 45b, 55a, 55b) befestigt ist, was es dem gyroskopischen wellenaktivierten Stromerzeuger ermöglicht, zu oszillieren, und wobei

die Kardanwelle (6A) so bereitgestellt wird, dass der gyroskopische wellenaktivierte Stromerzeuger und die Kardanwelle synchron miteinander oszillieren.

5. Wellenaktivierte Stromerzeugungsanlage nach Anspruch 4, ferner umfassend: ein Bremselement (47, 48, 57, 58), das einen Teil des großen Schwimmkörpers (46, 56) und einen Nichtkantenteil des gyroskopischen wellenaktivierten Stromerzeugers überbrückt, wobei der Teil zwischen dem Kardangelenk und entweder einem führenden Ende oder einem hinteren Ende des großen Schwimmkörpers in einer Fortpflanzungsbewegung einer Welle liegt.

6. Wellenaktivierte Stromerzeugungsanlage nach Anspruch 4 oder 5, wobei der große Schwimmkörper (46) ein stabförmiger Schwimmkörper ist, der in der Fortpflanzungsbewegung einer Welle lang ist.

7. Wellenaktivierte Stromerzeugungsanlage nach Anspruch 4 oder 5, wobei
der große Schwimmkörper (56) als großer gyroskopischer wellenaktivierter Stromerzeuger dient, umfassend: einen Schwimmkörper, ein Gyroskop, das vom Schwimmkörper getragen wird, und einen Stromerzeuger, der mit einer Kardanwelle des Gyroskops über eine Übersetzung verbunden ist, wobei eine Kardanwelle des Gyroskops als Reaktion auf die Oszillation des Schwimmkörpers mit einer Welle rotieren kann, wodurch der Stromerzeuger zum Erzeugen von Energie angetrieben wird, und wobei
der Schwimmkörper eine Doughnutform hat und einen inneren zylindrischen Teil umfasst, wobei das Gyroskop eine vertikale Kardanwelle besitzt.

8. Wellenaktivierte Stromerzeugungsanlage nach Anspruch 1 oder 4, wobei eine Richtung einer Auf-/Abwärtsbewegung, die gemacht wird, wenn der gyroskopische wellenaktivierte Stromerzeuger (1 a, 1 b) oszilliert, im Wesentlichen senkrecht zu einer Fortpflanzungsbewegung einer Welle ist.

**9.** Wellenkraftwerk, umfassend:

eine Kombination von mehr als einer der wellenaktivierten Stromerzeugungsanlagen (1a, 1 b) nach Anspruch 1 und 4.

**10.** Wellenkraftwerk nach Anspruch 9, wobei die mehr als einen gyroskopischen wellenaktivierten Stromerzeuger (1 a, 1 b) dicht angeordnet sind, sich aber nicht in einer Fortpflanzungsbewegung einer Welle überlappen.

**Revendications**

**1.** Système de génération d'électricité actionné par la houle comportant :

une génératrice d'électricité gyroscopique actionnée par la houle (1a, 1b) comprenant : un corps flottant (2) ; un gyroscope (5) supporté par le corps flottant ; et une génératrice d'électricité reliée à un arbre de cardan (6A) du gyroscope par l'intermédiaire d'un multiplicateur (9), laquelle génératrice d'électricité gyroscopique actionnée par la houle permet à un cardan du gyroscope de tourner en réponse à une oscillation du corps flottant avec une vague, en entraînant ainsi la génératrice d'électricité afin de générer de l'électricité ; et une structure de support (20, 21) dont une extrémité est fixée au fond de l'eau tandis que l'autre extrémité s'étend hors de l'eau, dans lequel une extrémité de la génératrice d'électricité gyroscopique actionnée par la houle est fixée sur la structure de support par l'intermédiaire d'un joint de cardan (18a, 18b), en permettant à la génératrice d'électricité gyroscopique actionnée par la houle d'osciller, et dans lequel l'arbre de cardan est prévu de telle sorte que la génératrice d'électricité gyroscopique actionnée par la houle et l'arbre de cardan oscillent en synchronisme l'un avec l'autre.

**2.** Système de génération d'électricité actionné par la houle selon la revendication 1 comportant en outre une barre (37) fixée sur la structure de support au-dessus ou en-dessous du joint de cardan, et un élément de frein (38a, 38b) qui forme un pont entre une partie qui n'est pas au centre de la barre et une partie qui n'est pas au bord de la génératrice d'électricité gyroscopique actionnée par la houle.

**3.** Système de génération d'électricité actionné par la houle selon la revendication 1 ou 2 comportant en outre un mécanisme de repliage (98a, 98b, 103) qui tire un élément de joint relié à la génératrice d'électricité gyroscopique actionnée par la houle dans la direction de la structure de support, afin de replier et fixer la génératrice d'électricité gyroscopique actionnée par la houle le long de la structure de support.

**4.** Système de génération d'électricité actionné par la houle comportant :

une génératrice d'électricité gyroscopique actionnée par la houle (41a, 41b, 51a, 51b) comprenant : un corps flottant (42) ; un gyroscope (5) supporté par le corps flottant ; et une génératrice d'électricité (10) reliée à un arbre de cardan (6A) du gyroscope par l'intermédiaire d'un multiplicateur (9), laquelle génératrice d'électricité gyroscopique actionnée par la houle permet à un cardan du gyroscope de tourner en réponse à une oscillation du corps flottant avec une vague, en entraînant ainsi la génératrice d'électricité afin de générer de l'électricité ; et un corps flottant de grande dimension (46, 56), dans lequel une extrémité de la génératrice d'électricité gyroscopique actionnée par la houle est reliée au corps flottant de grande taille par l'intermédiaire d'un joint de cardan (45a, 45b, 55a, 55b), en permettant à la génératrice d'électricité gyroscopique actionnée par la houle d'osciller, et l'arbre de cardan (6A) est prévu de telle sorte que la génératrice d'électricité gyroscopique actionnée par la houle et l'arbre de cardan oscillent en synchronisme l'un avec l'autre.

**5.** Système de génération d'électricité actionné par la houle selon la revendication 4 comportant en outre : un élément de frein (47, 48, 57, 58) qui forme un pont entre une portion du corps flottant de grande taille (46, 56) et une partie qui n'est pas au bord de la génératrice d'électricité gyroscopique actionnée par la houle, la portion étant entre le joint de cardan et une extrémité avant ou bien une extrémité arrière du corps flottant de grande taille dans une direction de déplacement d'une vague.

**6.** Système de génération d'électricité actionné par la houle selon la revendication 4 ou 5, dans lequel le corps flottant de grande taille (46) est un corps flottant en forme de barre qui allongé dans une direction de déplacement d'une vague.

**7.** Système de génération d'électricité actionné par la houle selon la revendication 4 ou 5, dans lequel le corps flottant de grande taille (56) sert de génératrice d'électricité gyroscopique actionnée par la houle de grande taille comprenant : un corps flottant ; un gyroscope supporté par le corps flottant ; et une génératrice d'électricité reliée à un arbre de cardan du gyroscope par l'intermédiaire d'un multiplicateur, et qui permet à un cardan du gyroscope de tourner en réponse à une oscillation du corps flottant avec une vague, en entraînant ainsi la génératrice d'électricité afin de générer de l'électricité, et dans lequel le corps flottant a une forme de beignet et comprend dans une partie cylindrique intérieure de celui-ci le gyroscope ayant un arbre de cardan vertical.

**8.** Système de génération d'électricité actionné par la houle selon la revendication 1 ou 4, dans lequel une direction d'un mouvement haut/bas réalisé quand la génératrice d'électricité gyroscopique actionnée par la houle (1a, 1b) oscille est sensiblement perpendiculaire à une direction de déplacement d'une vague.

**9.** Centrale électrique actionnée par la houle, comportant :

une combinaison de plus d'un des systèmes de génération d'électricité actionnés par la houle (1a, 1b) selon les revendications 1 et 4.

**10.** Centrale électrique actionnée par la houle selon la revendication 9 dans laquelle les plus d'un générateurs d'électricité gyroscopique actionnés par la houle (1a, 1b) sont disposés de manière dense mais ne se chevauchent pas l'un l'autre dans une direction de déplacement d'une vague.

FIG.1

EP 2 031 240 B1

FIG.2

(a)

(b)

FIG. 3

```
                                    ┌─────────────┐
                                    │   COARSE    │
                              ┌────→│ ADJUSTMENT  │
                              │     └──────┬──────┘
                            + │            │
┌─────────────┐  ┌──────┐    │            ↓
│FLOATING BODY│  │      │    │   ┌──────────────────┐
│ OSCILLATION │──│FILTER│──○─────│  ROTATION SPEED  │──────────→
│   SENSOR    │  │      │    │   │    CONTROLLER    │
└─────────────┘  └──────┘    │   └────────┬─────────┘
                            - ↑            ↑    ┌──────────────┐
                              │            │    │     FINE     │
                              │            │    │  ADJUSTMENT  │
                              │            │    └──────────────┘
                              │   ┌────────┴─────────┐
                              └───│   GIMBAL ANGLE   │──────────→
                                  │      SENSOR      │
                                  └──────────────────┘
```

FIG. 4

```
                    AVERAGE
                   FREQUENCY
┌─────────────┐        │
│FLOATING BODY│        │
│ OSCILLATION │────────┤
│   SENSOR    │        │
└─────────────┘        │
                       │                                    WATTMETER
                       ↓
            ┌──────────────────┐   ┌──────────┐   ┌──────────┐
        ┌──→│  ROTATION SPEED  │──→│  POWER   │──→│  POWER   │
        │   │ FINE ADJUSTMENT  │   │GENERATOR │   │  OUTPUT  │
        │   └──────────────────┘   └──────────┘   └────┬─────┘
        │                                              │
        └──────────────────────────────────────────────┘
```

## FIG. 5

(a)

WAVE HEIGHT

(b)

FIG.6

PROPAGATION DIRECTION OF WAVE

⇩ ⇩ ⇩

<u>200</u>

FIG.7

FIG.8

46

FIG.9

EP 2 031 240 B1

FIG. 10

PROPAGATION DIRECTION OF WAVE    <u>500</u>

FIG.11

(a)

GIMBAL
ROTATION
SPEED

(rad/s)

(b)

GYROSCOPIC
MOMENT

(N·m)

(c)

OSCILLATION
OF ENTIRE
DEVICE

(deg/s)

(d)

GENERATED
ENERGY

(W)

EP 2 031 240 B1

FIG.12

(a) GIMBAL ROTATION SPEED (rad/s)

(b) GYROSCOPIC MOMENT (N·m)

(c) OSCILLATION OF ENTIRE DEVICE (deg/s)

(d) GENERATED ENERGY (W)

EP 2 031 240 B1

FIG.13

(a)

PROPAGATION
DIRECTION

(b)

PROPAGATION
DIRECTION

EP 2 031 240 B1

FIG.14(a)

EP 2 031 240 B1

FIG.14(b)

<u>700</u>

71a — 83

82a — 82b

79a — 79b

80a

78a    78b

80

81

FIG.15(a)

FIG.15(b)

<u>800</u>

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005207332 A

- WO 02077369 A1